# EUROPEAN PATENT SPECIFICATION

(11) **EP 4 114 785 B1**
(45) Date of publication and mention of the grant of the patent: **21.05.2025**
(21) Application number: 21714753.7
(22) Date of filing: 05.03.2021
(51) Int. Cl.: B66F 11/04, F16N 31/00, E05B 15/00, E05B 65/46, E05C 3/04, E05B 63/00

(54) **A LEAK CONTAINMENT SYSTEM FOR A LIFT AND A LIFT WITH SUCH A SYSTEM**
LECKEINDÄMMUNGSSYSTEM FÜR EINEN AUFZUG UND AUFZUG MIT SOLCH EINEM SYSTEM
SYSTÈME DE CONFINEMENT DE FUITE POUR UN ASCENSEUR ET ASCENSEUR DOTÉ D'UN TEL SYSTÈME

(30) Priority: 06.03.2020 US 202062986004 P
(43) Date of publication of application: 11.01.2023
(73) Proprietor: Oshkosh Corporation, Oshkosh, Wisconsin 54902-2566 (US)
(72) Inventor: LIANG, Bin, Oshkosh, Wisconsin 54902-2566 (US); ABRAMS, Robert, Oshkosh, Wisconsin 54902-2566 (US); WANG, Wencai, Oshkosh, Wisconsin 54902-2566 (US); ROSENCRANCE, Devin, Oshkosh, Wisconsin 54902-2566 (US); STOUFFER, Michael, Oshkosh, Wisconsin 54902-2566 (US)
(74) Representative: Potter Clarkson
(86) International application number: PCT/US2021/021212
(87) International publication number: WO 2021/178897

(56) References cited:
- WO-A1-99/52769
- GB-A- 2 279 414
- US-A- 3 437 365
- US-A- 4 875 537
- US-A1- 2019 309 901

## Description

### CROSS-REFERENCE TO RELATED APPLICATION

This application claims priority to U.S. Provisional Patent Application No. 62/986,004, filed March 6, 2020.

### BACKGROUND

Scissor lifts and other mobile elevated work platforms (MEWPs) often use hydraulic fluid (e.g., oil) to lubricate the motor, pumps, and other power systems onboard the MEWP. When the MEWP travels over an uneven surface (e.g., passes over rough terrain) or traverses a sloped surface, hydraulic fluid may leak from one or more of the hydraulic systems onboard the MEWP. Hydraulic fluid leakage may contaminate a clean environment and is preferably avoided. A leak containment system for a lift according to the preamble of claim 1 is known from US 2019/0309901.

### SUMMARY

One exemplary embodiment relates to a leak containment system for use in a lift according to claim 1, in particular for a MEWP. The leak containment system includes a mounting bracket, a tray, and a locking mechanism. The mounting bracket has a first rail, a second rail, and a panel extending between the first rails and the second rail. The panel is vertically offset from feet formed on the first rail, and a channel is defined by at least the first rail and an underside of the panel. The tray is removably received within the channel. The tray includes a bottom surface surrounded by perimeter walls that together define a fluid container. The perimeter walls include a front perimeter wall that extends upwardly above the other walls. The locking mechanism is coupled to the mounting bracket and is configured to selectively engage the front perimeter wall of the tray to restrict movement of the tray outward from the channel.

Another exemplary non-claimed embodiment relates to a leak containment system for a lift. The leak containment system includes a tray assembly, a first absorbent pad, and a second absorbent pad. The tray assembly includes a first pan and a second pan. The first pan and second pan each define fluid containers that are formed by a base wall and a lip (e.g., a wall) that extends around a perimeter of the base wall. The first pan is coupled to and abuts the second pan along a common flange. The first absorbent pad is received within the first pan. The second absorbent pad is received within the second pan. At least a portion of the lip of each of the first pan and the second pan varies in height around the perimeter of the base wall and includes apertures that can removably secure the tray assembly to the lift (e.g., to the chassis).

Another exemplary non-claimed embodiment relates to a lift (e.g., a scissor lift, a MEWP, etc.). The lift includes a chassis, a hydraulic pump, a hydraulic fluid reservoir, a lift system, and a leak containment system. The chassis supports wheels that are used to move the lift. The hydraulic pump is supported by the chassis and is configured to provide pressurized hydraulic fluid to at least an actuator positioned on the lift. The hydraulic fluid reservoir is supported by the chassis and is configured to supply hydraulic fluid to the hydraulic pump. The lift system is supported by the chassis and is configured to adjust a position of a platform relative to the chassis using the actuator. The leak containment system extends below the chassis, the hydraulic pump, the hydraulic fluid reservoir, and the actuator. The leak containment system includes a tray assembly including a first pan and a second pan. The first pan and the second pan each define fluid containers that are formed by a base wall and a lip (e.g., a wal.) extending around a perimeter of the base wall. The first pan is coupled to and abuts the second pan along a common flange. At least a portion of the lip of each of the first pan and the second pan varies in height around the perimeter of the base wall and includes apertures that receive fasteners to removably secure the tray assembly below the chassis.

The invention is capable of other embodiments and of being carried out in various ways. Alternative exemplary embodiments relate to other features and combinations of features as may be recited herein.

### BRIEF DESCRIPTION OF THE FIGURES

The disclosure will become more fully understood from the following detailed description, taken in conjunction with the accompanying figures, wherein like reference numerals refer to like elements, in which:
FIG. 1 is a perspective view of a lift, according to an exemplary embodiment;
FIG. 2 is a perspective view of a leak containment system on the lift of FIG. 1;
FIG. 3 is a top perspective view of a bracket of the leak containment system of FIG. 2;
FIG. 4 is a drawer of the leak containment system of FIG. 2;
FIG. 5 is a locking mechanism of the leak containment system of FIG. 2;
FIG. 6 is a side view of the leak containment system of FIG. 2, detailing hydraulic fluid flow paths toward the leak containment system when the lift is traveling over or positioned on a level surface;
FIG. 7 is a side view of the leak containment system of FIG. 2, detailing hydraulic fluid flow paths toward the leak containment system when the lift is traveling along or positioned on an upwardly-sloped surface;
FIG. 8 is a side view of the leak containment system of FIG. 2, detailing hydraulic fluid flow paths toward the leak containment system when the lift is traveling along or positioned on a downwardly-sloped surface;
FIGS. 9-13 are top perspective views of the leak containment system of FIG. 2, detailing a hydraulic fluid removal and cleaning process;
FIG. 14 is a top perspective view of a lift, according to another exemplary non-claimed embodiment;
FIG. 15 is a bottom perspective view of the lift of FIG. 14, depicting another non-claimed leak containment system;
FIG. 16 is a top perspective view of a tray assembly present within the leak containment system of FIG. 15;
FIG. 17 is a top perspective view of the tray assembly of FIG. 16, coupled to a chassis of the lift of FIG. 14;
FIG. 18 is a top perspective view of the tray assembly of FIG. 17, coupled to additional trays; and
FIG. 19 is a top perspective view of the tray assembly of FIG. 18, including absorbent pads to create the leak containment system of FIG. 15.

### DETAILED DESCRIPTION

Before turning to the figures, which illustrate the exemplary embodiments in detail, it should be understood that the present application is not limited to the details or methodology set forth in the description or illustrated in the figures. It should also be understood that the terminology is for the purpose of description only and should not be regarded as limiting.

Referring to the FIGURES generally, the various exemplary embodiments disclosed herein relate to systems, apparatuses, and methods for containing hydraulic fluid leakage that may otherwise contaminate an environment that the MEWP is operating in. The leak containment systems provide guiding devices to help capture and direct leaking hydraulic fluid toward a container that can act as a hydraulic fluid trap. The hydraulic fluid trap prevents leakage of the hydraulic fluid outward to the external environment, which can allow the MEWP to operate in clean environments. The leak containment systems are further designed to capture hydraulic fluid when the MEWP traverses rough or sloped surfaces. As explained below, the leak containment systems can be directly mounted or otherwise coupled to an underside of the MEWP chassis to capture and contain any fluid leaking or otherwise exiting components of the MEWP, including the engine, hydraulic pump, fuel tank, hydraulic tank, hydraulic valves, hydraulic cylinders, batteries, hydraulic drive motors, hoses, and interconnection points. The system of trays and brackets prevents leaked fluid from reaching the ground or floor below.

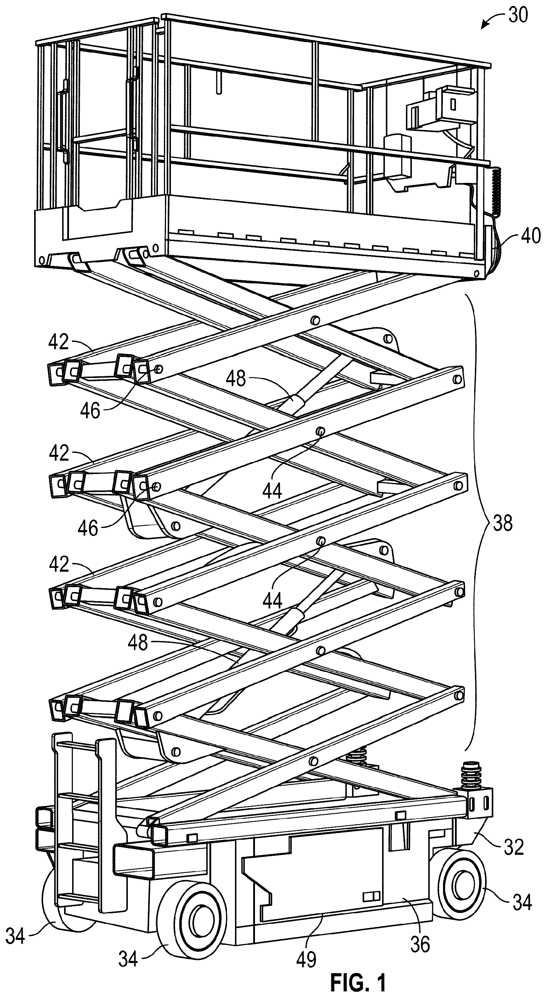

Referring to FIG. 1, a MEWP 30 is shown. The MEWP 30 can be a scissor lift or boom lift, for example, which can be used to perform a variety of different tasks at various heights relative to the ground below. The MEWP 30 includes a chassis, shown as base 32, that is supported by wheels 34 positioned about the base 32. The wheels 34 can be driven by a motor 36 (e.g., an electrical motor, etc.) to propel the MEWP 30 to a desired location for completing a task.

A retractable lifting mechanism 38 is coupled to the base 32 and supports a platform 40 and platform assembly. As depicted in FIG. 1, the retractable lifting mechanism 38 is a scissor lift structure formed of a series of linked, foldable support members 42 connected to one another using central pivot pins 44 and outer pivot pins 46. The central pivot pins 44 and outer pivot pins 46 extend through adjacent support members 42 to pivotally couple the support members 42 in an assembly.

Adjusting the angular relationships between adjacent support members 42 pivots the support members 42 away from (or toward) the base 32 and away from (or toward) one another, which alters the position of the platform 40 relative to the base 32. By altering the position (e.g., the height) of the platform 40 relative to the base 32, workers can be elevated to different vertical locations to complete tasks from the platform 40. The foldable support members 42 of the retractable lifting mechanism 38 are folded or unfolded using an actuator 48, such as a hydraulic cylinder, pneumatic cylinder, or electric linear actuator, for example. The actuator 48 controls the position of the retractable lifting mechanism 38 and platform 40 by selectively applying force to the lifting mechanism 38, which occurs by changing a length of the actuator 48. The length of the actuator 48 can be changed by adjusting a hydraulic fluid supply to one side of the actuator 48, for example.

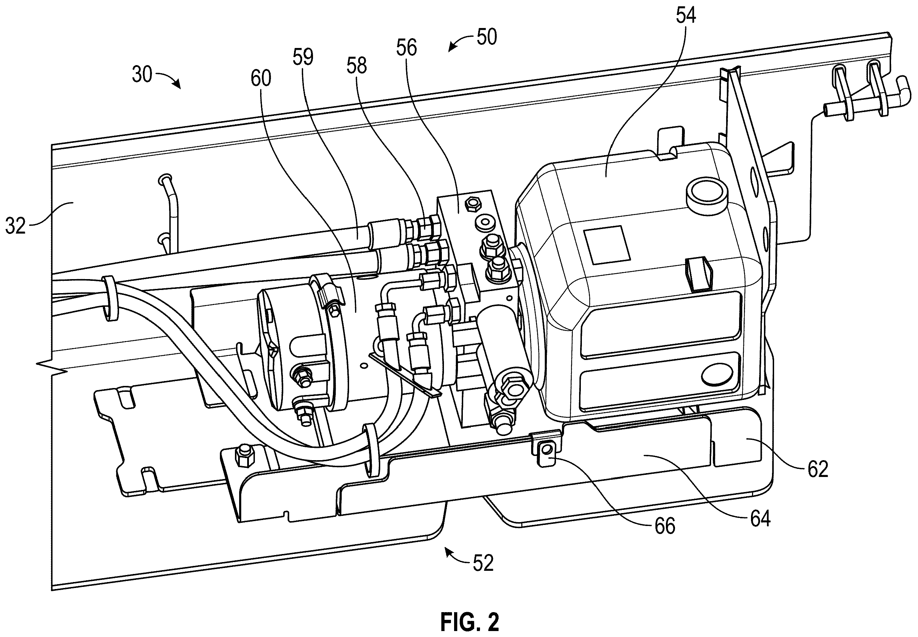

As depicted in FIGS. 2-13, the MEWP 30 includes a leak containment system 50. The leak containment system 50 can be positioned inside a door 49 extending along an outside of the base 32, shown in FIG. 1. The leak containment system 50 can include a power unit catch-pan mechanism 52 that is adapted to capture and trap leaking hydraulic fluid (e.g., oil) before the leaking hydraulic fluid can exit the MEWP 30 to the external environment. The power unit catch-pan mechanism 52 is coupled (e.g., bolted, welded, or otherwise fastened) to the base 32 (e.g., the chassis) and positioned below potential leak sources on MEWP 30, including the oil reservoir 54, manifold 56, hose connections 58, and hydraulic fluid pump 60, to prevent hydraulic fluid from escaping downward, onto the floor below.

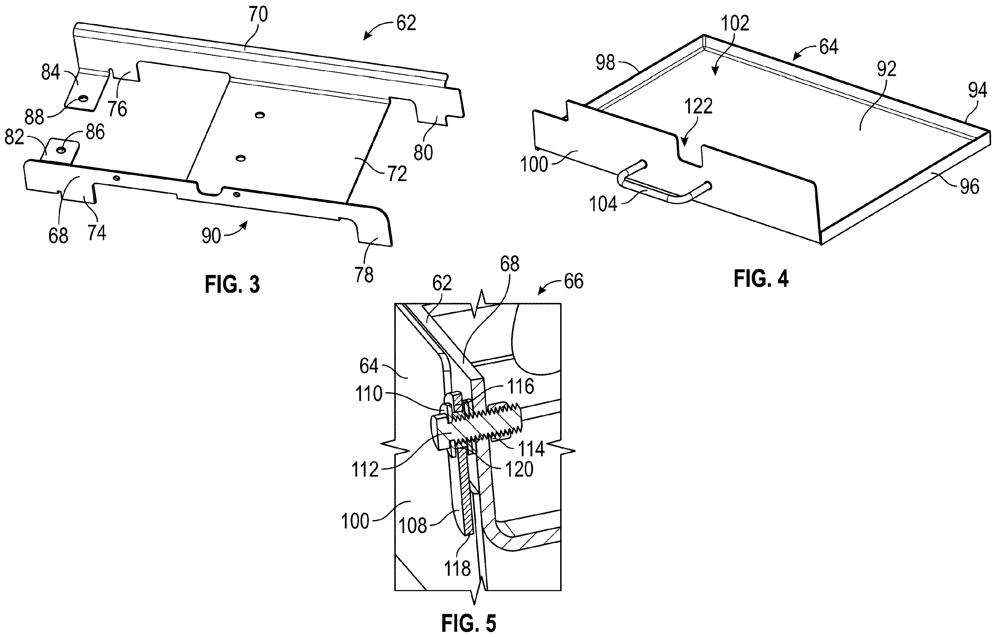

The power unit catch pan mechanism 52 is defined, generally, by a mounting bracket 62, a tray 64, and a locking mechanism 66. As depicted in FIG. 3, the mounting bracket 62 generally includes a first rail 68 and a second rail 70 spaced apart from the first rail 68. The rails 68, 70 extend approximately parallel to one another, and are coupled together by a panel 72. The panel 72 spans between and extends approximately perpendicular to the rails 68, 70, which together form a cradle for receiving and supporting the weight of the oil reservoir 54 or manifold 56, for example. Feet 74, 76, 78, 80 formed on opposite ends of the rails 68, 70 support the mounting bracket 62. In some examples, the feet 74, 76 support flanges 82, 84 that extend inward, partially across the gap between the rails 68, 70. Through holes 86, 88 can be formed through the flanges 82, 84 to receive and fasten or otherwise secure the mounting bracket 62 to the base 32 of the MEWP 30. The mounting bracket 62 can be formed as a single, continuous piece that is folded or otherwise bent to shape.

In some examples, the panel 72 is offset from (e.g., elevated from) the feet 74, 76, 78, 80 formed on the rails 68, 70 of the mounting bracket 62. The vertical offset between the panel 72 and inner surfaces of the feet 74, 76, 78, 80 together create a channel 90 extending below the mounting bracket 62. The channel 90 can having a generally rectangular shape that extends entirely across the width of the mounting bracket 62, approximately perpendicular to the rails 68, 70.

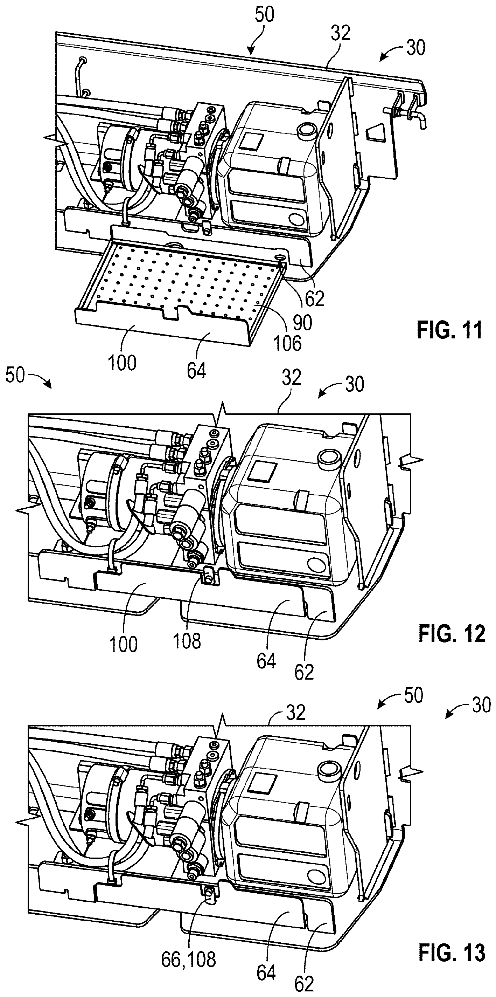

The channel 90 receives the tray 64. As depicted in FIG. 4, the tray 64 has a generally rectangular shape that is sized to form a clearance fit with the feet 74, 76, 78, 80 and an underside of the panel 72. The tray 64 has a generally flat bottom 92 surrounded by perimeter walls 94, 96, 98, 100. The perimeter walls 94, 96, 98, 100 extend approximately vertically and upwardly away from the bottom 92 to define a fluid container 102. The fluid container 102 can also receive an absorbent pad (e.g., absorbent pad 106, shown in FIG. 11) to help trap fluid within the fluid container 102. In some examples, the front perimeter wall 100 extends upwardly away from the bottom 92 beyond the other perimeter walls 94, 96, 98. In such examples, the front perimeter wall 100 can be used to help position the tray 64 relative to the mounting bracket 62. The tray 64 can slide inward, into the channel 90, until the front perimeter wall 100 engages the first rail 68 of the mounting bracket 62. The front perimeter wall 100 can further support a handle 104. The handle 104 can have a generally U-shaped profile that extends outwardly away from the front perimeter wall 100 to help a worker push, pull, or otherwise slide the tray 64 relative to the mounting bracket 62 toward a desired position. In some examples, a locking recess 122 is formed within a top of the front perimeter wall 100 to accommodate the locking mechanism 66, as explained below.

The tray 64 can be secured into its stowed position within the channel 90 and beneath the mounting bracket 62 using the locking mechanism 66. As depicted in FIG. 5, the locking mechanism 66 is rotatably mounted to the first rail 68 of the mounting bracket 62 and can move between positions blocking outward movement of the tray 64 from the channel 90 and positions permitting the tray 64 to slide outward, out of the channel 90.

The locking mechanism 66 generally includes a latch 108, a bearing 110, a fastener 112, and a nut 114. The latch 108 has an elongate shape that includes a mounting end 116 and a blocking end 118 opposite the mounting end 116. A hole 120 is formed through the mounting end 116 to receive and secure the latch 108 to the first rail 68 of the mounting bracket 62. The fastener 112 and nut 114 secure the latch 108 to the mounting bracket 62. As depicted in FIG. 5, the fastener 112 extends through the hole 120 in the latch 108 and through the first rail 68 of the mounting bracket 62. The nut 114 threadably engages the fastener 112 and can be tightened until the latch 108, fastener 112, and nut 114 are coupled together on the mounting bracket 62. A bearing 110 can be received around the fastener 112 and within the hole 120 of the latch 108 to permit or otherwise promote rotation of the latch 108 about the fastener 112. Rotation of the latch 108 about the fastener 112 allows the latch 108 to transition between a locked, "tray blocking" position and an unlocked, or "open" position. Although shown as a bearing 110, the latch 108 can be mounted to the mounting bracket 62 without rotational aids. For example, washers (not shown) can used with the fastener 112 and nut 114 to couple the latch 108 to the mounting bracket 62. Frictional forces caused by the engagement between the washer, nut 114, and fastener 112 can permit limited rotational movement of the latch 108 about an axis defined by the fastener 112.

The latch 108 is positioned on the mounting bracket 62 to selectively restrict movement between the tray 64 and mounting bracket 62. Because the latch 108 has an elongate structure and is mounted to the first rail 68 of the bracket 62 at the mounting end 116, the unsupported, free blocking end 118 of the latch 108 is naturally gravity-biased downward, toward the tray 64 and to the locked position. As depicted in FIGS. 2, 5, and 9, when the blocking end 118 is oriented downward (e.g., the latch 108 is in the locked position), at least a portion of the latch 108 overlaps with the front perimeter wall 100 of the tray 64. When in the locked position, the latch 108 extends from within the locking recess 122 downward, into engagement with the front perimeter wall 100. The engagement between the front perimeter wall 100 of the tray 64 and the latch 108 prohibits outward movement of the tray 64 relative to the mounting bracket 62, effectively securing the tray 64 within the channel 90 so that it can receive and trap hydraulic fluid falling or otherwise directed downwardly from the components positioned above the power unit catch pan assembly 52. Rotating the blocking end 118 of the latch 108 upward about the fastener 112 eliminates the overlap between the latch 108 and the front perimeter wall 100 of the tray 64, which allows the tray 64 to be pulled or otherwise slid outwardly from the channel 90 of the mounting bracket 62 for cleaning and/or fluid (e.g., hydraulic or water) removal.

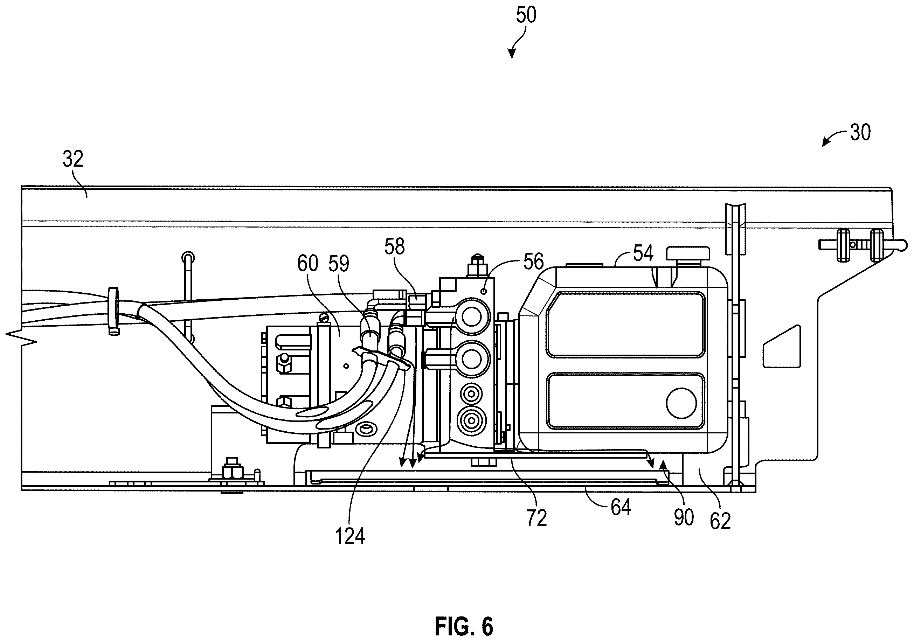

Referring now to FIGS. 6-8, the function of the power unit catch pan assembly 52 on level conditions is described. As explained above, the power unit catch pan assembly 52 is generally positioned below at least a portion of the oil reservoir 54, manifold 56, hose connections 58, and hydraulic fluid pump 60 of the MEWP 30. Under normal, level operating conditions shown in FIG. 6, hydraulic fluid may leak outward from the hose connections 58. To help direct the hydraulic fluid downward and toward the tray 64, the hose connections 58 (or hoses 59) can be fit with one or more diverting plates 124. One or more hoses 59 and/or hose connections 58 can be received within the diverting plates 124, which are angled downwardly and directionally (e.g., inwardly) toward the mounting bracket 62 and tray 64 below. The diverting plates 124 can redirect oil passing along the outer surfaces of the hoses 59 toward the tray 64. In some examples, the diverting plates 124 are mounted to an outer housing of the hydraulic fluid pump 60, so that any oil leaking from an upper portion of the pump 60 is similarly directed downward and toward a center of the tray 64. The positioning of the hose connections 58 and manifold 56 directly above the mounting bracket 62 and tray 64 causes any leaking fluid to fall onto the panel 72 or directly onto the tray 64. Hydraulic fluid caught on the panel 72 is directed outwardly off of the panel 72 and into the tray 64 positioned within the channel 90 below. Because the rails 68, 70 each extend upwardly beyond the panel 72, hydraulic fluid or water remains contained within the power unit catch pan assembly 52 even if fluid pooling on the panel 72 occurs.

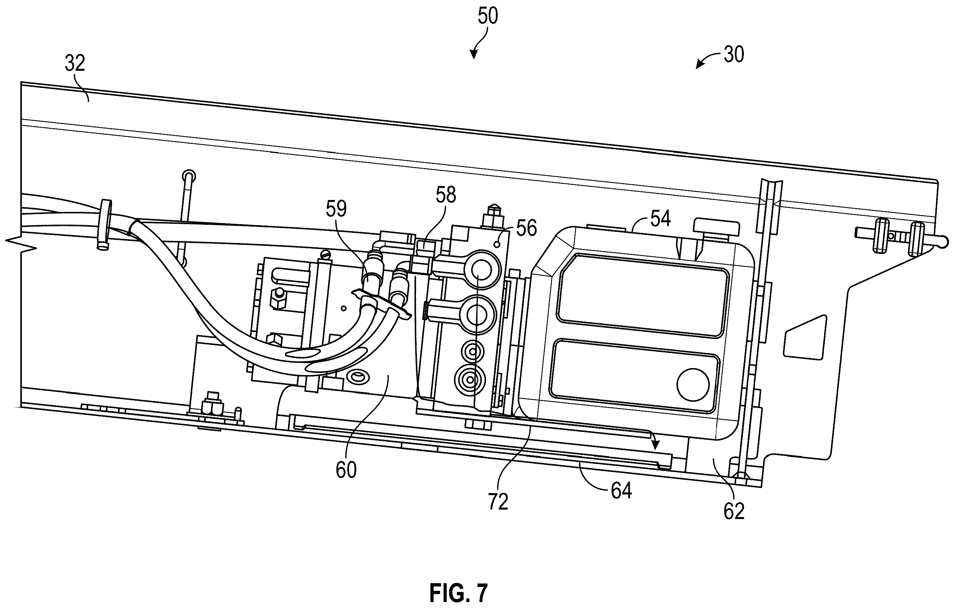

When the MEWP 30 travels along upwardly-sloped surfaces (e.g., up an incline of ~25% grade), the power unit catch pan assembly 52 is similarly situated to capture and trap any hydraulic fluid leaking from the equipment above. Similarly, the power unit catch pan assembly 52 can capture water within the system. As shown in FIG. 7, fluid dripping downward from either of the hose connections 58, aided by gravity, drops onto the panel 72 of the mounting bracket 62. The angled slope of the panel 72 directs the hydraulic fluid downward, along the surface of the panel 72 to the tray 64 below. The tray 64 extends outwardly beyond the panel 72 and can catch the low velocity fluid traveling along the panel 72 as it passes beyond the edge of the panel 72.

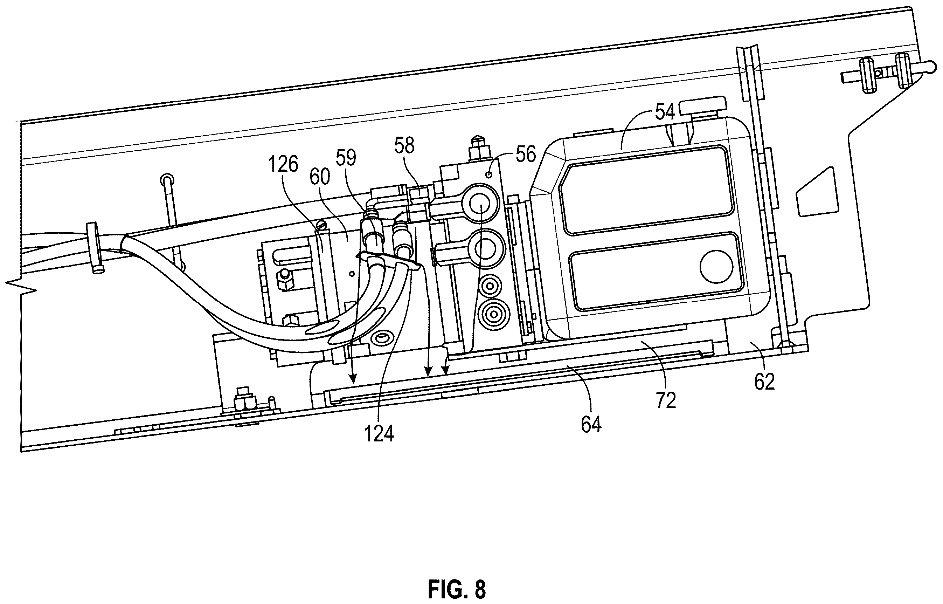

When the MEWP 30 travels along downwardly-sloped surfaces (e.g., down an incline of ~25% grade), the power unit catch pan assembly 52 is still equipped to handle, capture, and contain any leaking fluid from the equipment above. As shown in FIG. 8, fluid dripping downward from the manifold 56 may pass onto the panel 72, where it is then directed toward the tray 64 below. Fluid dripping or otherwise flowing along the outer surfaces of the hoses 59 will be contacted and redirected toward the tray 64 by the diverting plates 124. A rubber stopper 126 extending along and outward from an exterior surface of the hydraulic fluid pump 60 can block further fluid flow along the outer housing of the hydraulic fluid pump 60. With the forward flow of hydraulic fluid along the outer housing of the hydraulic fluid pump 60 blocked by the rubber stopper 126, gravity causes the hydraulic fluid to drip downward, onto the tray 64 below.

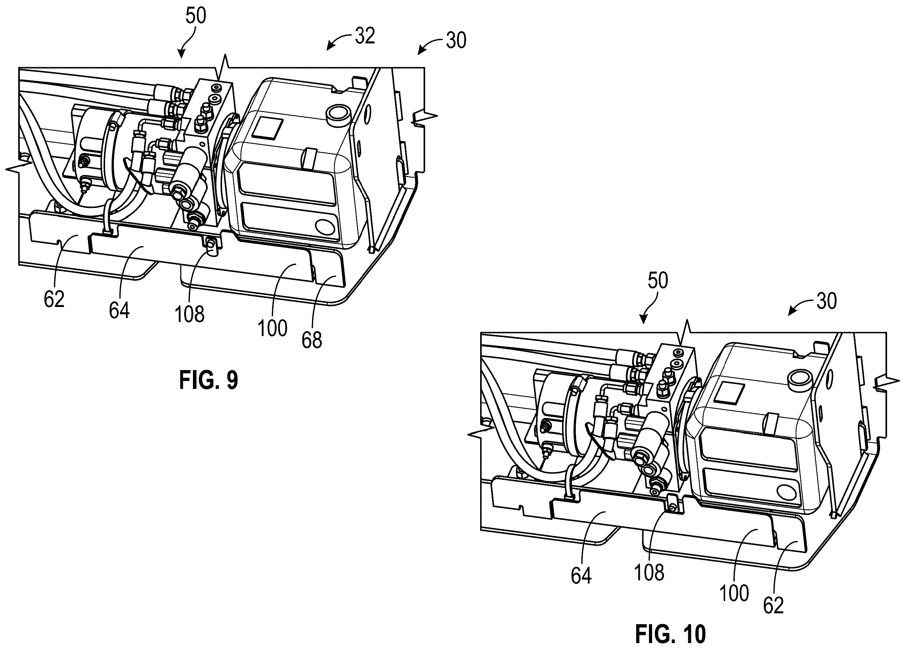

With reference now to FIGS. 9-13, a process of cleaning oil or other fluid from the power unit catch pan assembly 52 is depicted. As shown in FIG. 9, the tray 64 is locked into the channel 90 of the mounting bracket 62 by the locking mechanism 66. In the locked position, the latch 108 secures the tray 64 in a position to receive and capture leaking hydraulic fluid from the equipment above. Engagement between the mounting bracket 62, latch 108, and front perimeter wall 100 of the tray 64 prevents the tray 64 from moving outward from the channel 90.

To remove the tray 64 and any hydraulic fluid captured and contained within the tray 64, the locking mechanism 66 can be rotated to the unlocked position, as shown in FIG. 10. The latch 108 can be rotated about the fastener 112 until the blocking end 118 of the latch 108 extends upward, into and out of the locking recess 122. In the unlocked position, the latch 108 no longer overlaps with any portion of the front perimeter wall 100 of the tray. Accordingly, and as depicted in FIG. 11, the tray 64 can be moved relative to the mounting bracket 62. In some examples, the tray 64 is slidably coupled to the mounting bracket 62. In other examples, the tray 64 rests directly on the base 32 of the MEWP 30, and clearance between the tray 64 and the channel 90 allows the tray 64 to be moved into or out of the mounting bracket 62. The tray 64 can be completely removed from the channel 90 so that the tray 64 can be taken to a hydraulic fluid receptacle for safely disposing oil and other contaminants trapped within the tray 64. As indicated previously, an absorbent pad 106 can be positioned within the fluid container 102 of the tray 64 to help further expedite the cleaning process. Accordingly, the absorbent pad 106 can be disposed of and a new absorbent pad 106 can be positioned in the tray 64 to effectively remove trapped hydraulic fluid from within the tray 64. Alternatively, the absorbent pad 106 can be a reusable pad that can release captured oil/fluid when placed in a treatment solution. In some examples, the absorbent pad 106 can be a hydrophobic pad that is configured to absorb oil and/or hydraulic fluid while repelling water.

With a new absorbent pad positioned within the tray 64, the tray 64 can be placed back into the channel 90 and returned to a stowed position beneath the mounting bracket 62. The tray 64 can be pushed forward into the channel 90, as depicted in FIG. 12. When the front perimeter wall 100 engages the first rail 68 of the mounting bracket 62, the locking mechanism 66 can be locked by either physically rotating the latch 108 or by allowing gravity to return the latch 108 to its downward position, extending over and overlapping a portion of the tray 64 to prevent movement of the tray 64 outward from the channel 90.

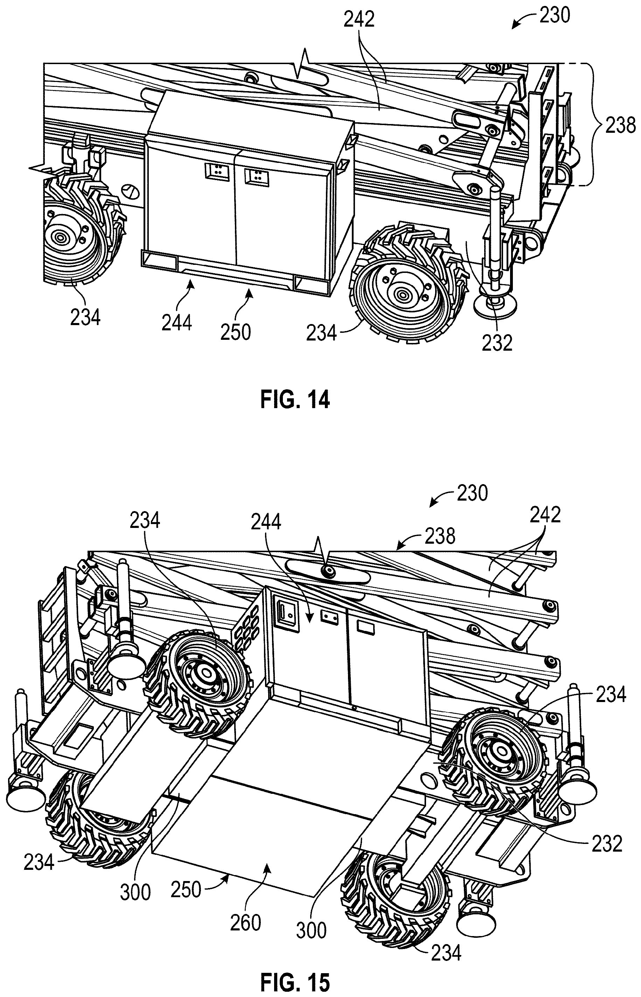

Referring now to FIGS. 14-19, which concern non-claimed embodiments, another MEWP 230 is shown. Like the MEWP 30, the MEWP 230 is a scissor lift. The MEWP 230 includes a chassis 232 supported by wheels 234 positioned about the chassis 232. The wheels 234 can be driven by a motor (not shown) to propel the MEWP 230 to a desired location for completing a task. The MEWP 230 further includes a retractable lifting mechanism 238 coupled to the chassis 232. The retractable lifting mechanism 238 supports a platform (not shown). As depicted in FIG. 14, the retractable lifting mechanism 238 is a scissor lift structure formed of a series of linked, foldable support members 242 connected to one another and movable relative to one another by an actuator, such as a hydraulic cylinder, pneumatic cylinder, or electric linear actuator. The position of the actuator determines the height of the work platform coupled to the retractable lifting mechanism 238. The MEWP 230 is designed to traverse rough surfaces and other terrain, and includes a series of stabilizing jacks 240 positioned about the perimeter of the chassis 232 to secure the MEWP 230 in a desired and balanced position relative to a surface. In some examples, the MEWP 230 includes a power unit cabinet 244 coupled to and extending away from the chassis 232. The power unit cabinet 244 can house one or more of the prime mover (e.g., the electric motor), the hydraulic pump(s), fuel tanks, hydraulic tanks, hydraulic valves, hydraulic cylinders, batteries, hydraulic drive motors, hoses, interconnection points, and/or the valve manifolds. The power unit cabinet 244 acts as a protective housing for equipment positioned inside it.

The MEWP 230 further includes a leak containment system 250 coupled to the chassis 232 to prevent unwanted fluid leakage onto the floor below. The leak containment system 250 generally includes a series of trays that are bolted or otherwise mounted to the underside of the chassis 232 which capture and contain fluids that are leaked or otherwise emitted from the equipment above (e.g., within the power unit cabinet 244). As depicted in FIG. 15, the leak containment system 250 creates a generally continuous fluid trap extending between the wheels 234 of the MEWP 230.

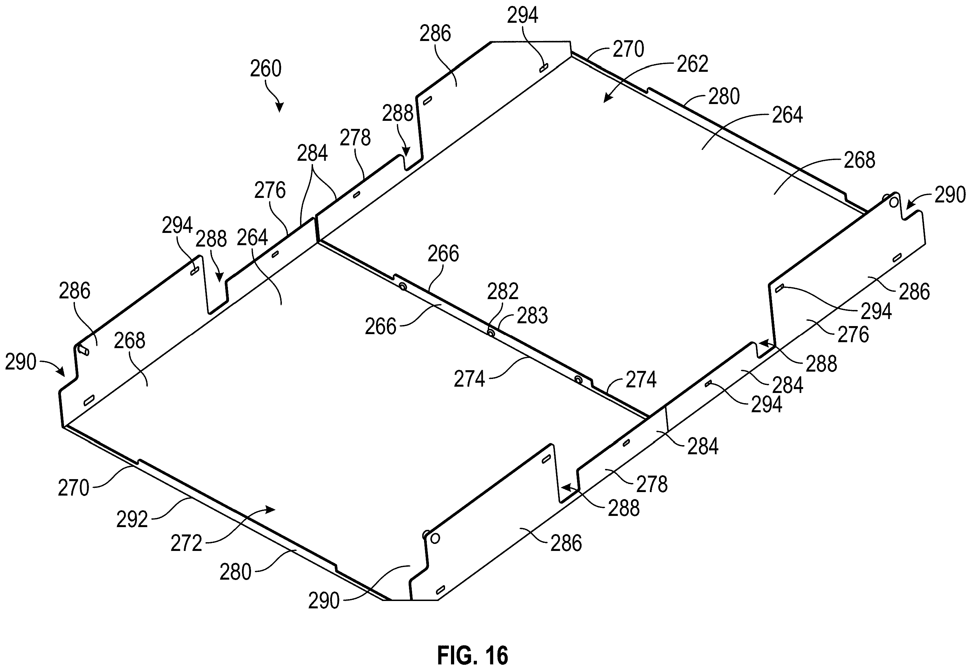

With additional reference now to FIG. 16, the leak containment system 250 includes a tray assembly 260. The tray assembly 260 can be formed of steel, aluminum, or a composite material, for example, and defines a fluid container 262 for receiving and trapping hydraulic fluids expelled from the various fluid handling systems on the MEWP 230 above, as well as water (e.g., condensation) that might otherwise collect upon or fall from the MEWP 230. In some examples, the tray assembly 260 includes two pans 264. The pans 264 can have an identical shape and size, and can be coupled to one another along a common mounting flange 266. Each of the pans include a generally flat base 268 and a raised lip 270 extending around the entire perimeter of the pan 264 to define a fluid container 272. The raised lip 270 can be non-uniform in shape, as explained in detail below.

The raised lip 270 of the pan 264 is defined by four walls 274, 276, 278, 280 extending upwardly from the rectangular perimeter of the base 268 of the pan 264. The first wall 274 can include the mounting flange 266, for example, that extends upwardly from only a portion of the first wall 274. The mounting flange 266 can provide a series of mounting holes 282 that can receive and secure fasteners 283 to couple the two pans 264 together.

The second and third walls 276, 278 are positioned on opposite sides of the base 268. The second and third walls 276, 278 can be mirror images of one another, for example. The second and third walls 276, 278 are each defined by a wing 284. The wing 284 extends away from the first wall 274, and can extend upwardly beyond the mounting flange 266. The wing 284 has a generally rectangular shape and extends along a portion of the length of the second and third wall 276, 278. The second and third walls 276, 278 are further defined by a mounting tab 286. The mounting tab 286 is spaced apart from the wing 284, toward the fourth wall 280. In some examples, a recess 288 is formed between the wing 284 and the mounting tab 286. In some examples, the recess 288 forms the lowermost section of the raised lip 270 on each of the second and third walls 276, 278 of the pan 264. In some examples, the mounting tab 286 includes a stepped recess 290 formed within the end of the mounting tab 286 adjacent the fourth wall 280. The fourth wall 280 opposes the first wall 274 and includes the same general shape as the first wall 274. For example, the fourth wall 280 can be defined by a flange 292 extending a portion of the distance between the second wall 276 and the third wall 278. The flange 292 can omit mounting holes, however, so that an assembly worker does not fabricate or assemble the tray assembly 260 improperly (e.g., by arranging one or both of the trays 264 backwards). The wings 284 and mounting tabs 286 include a series of holes 294 to help secure the tray assembly 260 to the chassis 232. In some examples, the holes 294 have an elongate (e.g., oval) shape to help accommodate differently-sized chasses 232.

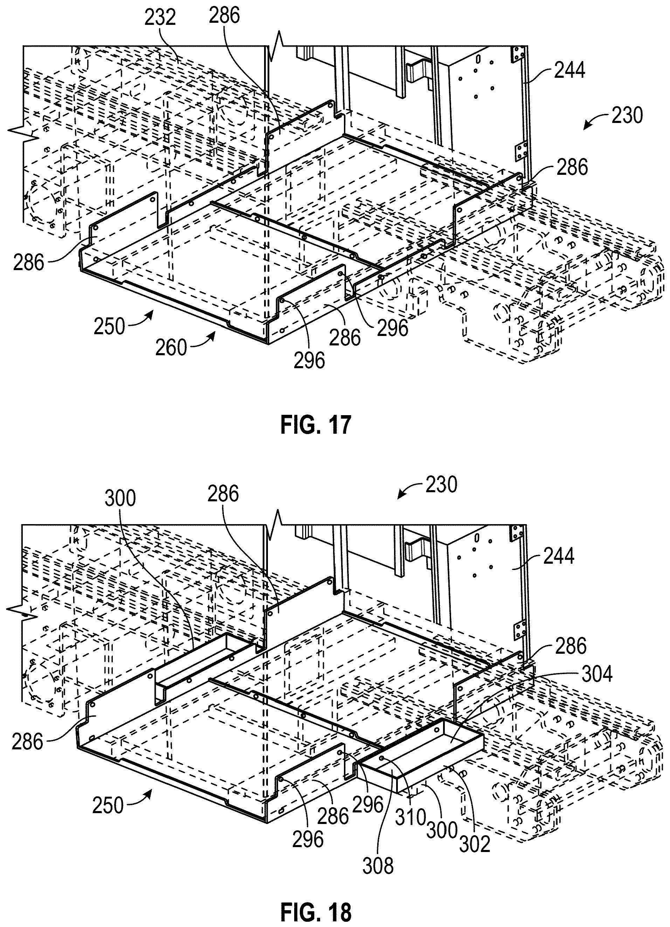

With reference now to FIGS. 17-19, the tray assembly 260 is shown mounted to the chassis 232 of the MEWP 230. The tray assembly 260 is arranged so that the mounting tabs 286 extend upwardly, along a portion of the power unit cabinet 244, where it can be bolted into position. The tray assembly 260 extends between the axles of the MEWP 230 and entirely across the chassis 232 to serve as a fluid catch for all fluid leaking from or otherwise spilling out of the power unit cabinet 244 or the MEWP 230 above. By extending and enclosing the bottom of the chassis 232, the mounting tabs 286 provide an easy access point to the leak containment system 250 that allows the tray assembly 260 to be readily coupled and decoupled from the chassis 232 using fasteners 296. In some examples, one or more threaded holes (e.g., blind holes or through holes) are formed within the chassis 232 (or the power unit cabinet 244) to promote easy coupling and decoupling of the leak containment system 250. Alternatively, one or more pins or latches can be used to couple the tray assembly 260 to the chassis 232.

As depicted in FIG. 18, the leak containment system 250 can further include trays 300. The trays 300 have a rectangular shape defined by a wall 302 extending around a flat bottom 304. The wall 302 can be defined by a uniform height, and can include one or more mounting holes 308. The mounting holes 308 can be used to position the tray 300 relative to the wings 284 on each of the trays 264. Additional fasteners 310 can be used to mount the trays 300 to the wings 284 of the tray assembly 260 to further extend the leak containment system 250. The trays 300 are positioned on opposite sides of the tray assembly 260, giving the tray assembly 260 and leak containment system 250, more generally, a cross-shaped perimeter.

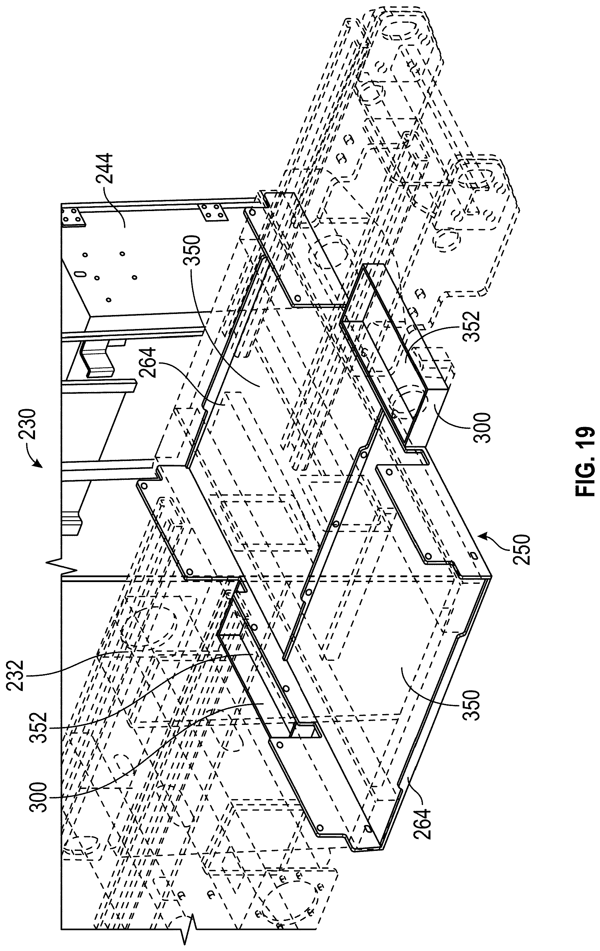

The leak containment system 250 can be completed by providing each of the pans 264 and trays 300 with absorbent mats 350, 352. As shown in FIG. 19, the absorbent mats 350, 352 are sized to sit flat upon the respective flat base 268 and bottom 304 of the trays 264, 300. The absorbent mats 350, 352 can be removably received within the trays 264, 300, so that they can be removed and replaced when machine maintenance is performed. The absorbent mats 350, 352 can once again be formed of a hydrophobic material that is designed to capture oil and repel water.

Using the foregoing leak containment systems, lifts and other types of MEWPs can be operated within clean environments. The leak containment systems prevent contaminants from reaching the ground or external environment below or outside the MEWP, which can prevent unwanted pollution or contamination. The leak containment systems are designed to be removably coupled to the MEWP so that captured hydraulic or engine fluid can be removed from the MEWP periodically.

Although this description may discuss a specific order of method steps, the order of the steps may differ from what is outlined. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps, and decision steps.

As utilized herein, the terms "approximately", "about", "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like, as used herein, mean the joining of two members directly or indirectly to one another. Such joining may be stationary (e.g., permanent, etc.) or moveable (e.g., removable, releasable, etc.). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," "between," etc.) are merely used to describe the orientation of various elements in the figures. It should be noted that the orientation of various elements may differ according to other exemplary embodiments, and that such variations are intended to be encompassed by the present disclosure.

It is important to note that the construction and arrangement of the leak containment system as shown in the exemplary embodiments is illustrative only. Although only a few embodiments of the present disclosure have been described in detail, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements. It should be noted that the elements and/or assemblies of the components described herein may be constructed from any of a wide variety of materials that provide sufficient strength or durability, in any of a wide variety of colors, textures, and combinations. Accordingly, all such modifications are intended to be included within the scope of the present inventions. Other substitutions, modifications, changes, and omissions may be made in the design, operating conditions, and arrangement of the preferred and other exemplary embodiments without departing from scope of the appended claims.

## Claims

1. A leak containment system (50) for a lift (30), comprising:
a mounting bracket (62) having a first rail (68), a second rail (70), and a panel (72) extending between the first rail (68) and the second rail (70), wherein the panel (72) is vertically offset from feet (74,76) formed on the first rail (68), and wherein a channel (90) is defined by at least the first rail (68) and an underside of the panel (72);
the leak containment system being **characterized in that** it further includes a tray (64) removably received within the channel (90) formed within the mounting bracket (62), the tray (64) including a bottom surface (92) surrounded by a plurality of perimeter walls (94,96,98,100) that together define a fluid container (102), wherein the plurality of perimeter walls (94,96,98,100) includes a front perimeter wall (100) extending upwardly above the other walls (94,96,98) in the plurality of perimeter walls (94,96,98,100); and
a locking mechanism (66) coupled to the mounting bracket (62) and configured to selectively engage the front perimeter wall (100) of the tray (64) to restrict movement of the tray (64) outward from the channel (90).

2. The leak containment system (50) of claim 1, wherein the first rail (68) is defined by a first foot (74), a second foot (78) spaced apart from the first foot, and a bridge section extending between the first foot (74) and the second foot (78), wherein the first foot (74), the second foot (78), and the bridge section together define an entrance of the channel (90).

3. The leak containment system (50) of claim 2, wherein the panel (72) extends away from the bridge section of the first rail (68) toward the second rail (70).

4. The leak containment system (50) of claim 2, wherein a locking recess (122) is formed within a top of the front perimeter wall (100), and wherein at least a portion of the locking mechanism (66) extends from the mounting bracket (62), through the locking recess (122), and outward beyond the front perimeter wall (100).

5. The leak containment system (50) of claim 4, wherein the locking mechanism (66) includes a latch (108) that is rotatably coupled to the mounting bracket (62), wherein the latch (108) is configured to selectively block movement of the tray (64) relative to the mounting bracket (62).

6. The leak containment system (50) of claim 5, wherein the latch (108) is biased into a locking position, wherein in the locking position, the latch (108) extends downward from the mounting bracket (62), beyond the locking recess (122), to overlap at least a portion of the front perimeter wall (100) of the tray (64) so that movement of the tray (64) between the latch (108) and the mounting bracket (62) is restricted.

7. The leak containment system (50) of claim 6, wherein the latch (108) is biased into the locking position by gravity.

8. The leak containment system (50) of claim 6, wherein the latch (108) is rotatably coupled to the mounting bracket (62) using a bearing (110), wherein the latch (108) and bearing (110) are fastened to the bridge section of the first rail (68).

9. The leak containment system (50) of claim 6, wherein the latch (108) is movable from the locking position to an unlocked position by rotating the latch (108) relative to the mounting bracket (62) by about 180 degrees.

10. The leak containment system (50) of claim 1, wherein the mounting bracket (62) is formed by bending a singular metal panel into at least three perpendicular sections.

11. The leak containment system (50) of claim 1, wherein an absorbent pad (106) is received within the fluid container (102) of the tray (64).

12. The leak containment system (50) of claim 11, wherein the absorbent pad (106) is formed from a reusable hydrophobic material.

13. The leak containment system (50) of claim 1, wherein the panel (72) includes an angled slope.

14. The leak containment system (50) of claim 1, wherein the tray (64) extends outwardly beyond the panel (72).

15. The leak containment system (50) of claim 1, wherein a cradle is defined by the first rail (68), the second rail (70), and the panel (72).

## Patentansprüche

1. Leckrückhaltesystem (50) für einen Aufzug (30), umfassend:
eine Befestigungshalterung (62) mit einer ersten Schiene (68), einer zweiten Schiene (70) und einer Platte (72), die sich zwischen der ersten Schiene (68) und der zweiten Schiene (70) erstreckt, wobei die Platte (72) vertikal von Füßen (74, 76) versetzt ist, die an der ersten Schiene (68) ausgebildet sind, und wobei ein Kanal (90) durch mindestens die erste Schiene (68) und eine Unterseite der Platte (72) definiert ist;
das Leckrückhaltesystem **dadurch gekennzeichnet ist, dass** es ferner eine Ablage (64) einschließt, die entfernbar in dem Kanal (90) aufgenommen ist, der in der Befestigungshalterung (62) ausgebildet ist, wobei die Ablage (64) eine untere Oberfläche (92) einschließt, die von einer Vielzahl von Umfangswänden (94, 96, 98, 100) umgeben ist, die zusammen einen Fluidbehälter (102) definieren, wobei die Vielzahl von Umfangswänden (94, 96, 98, 100) eine vordere Umfangswand (100) einschließt, die sich nach oben über die anderen Wände (94, 96, 98) in der Vielzahl von Umfangswänden (94, 96, 98, 100) erstreckt; und
einen Verriegelungsmechanismus (66), der mit der Befestigungshalterung (62) gekoppelt und konfiguriert ist, um selektiv mit der vorderen Umfangswand (100) der Ablage (64) in Eingriff zu kommen, um die Bewegung der Ablage (64) nach außen aus dem Kanal (90) zu begrenzen.

2. Leckrückhaltesystem (50) nach Anspruch 1, wobei die erste Schiene (68) durch einen ersten Fuß (74), einen zweiten Fuß (78), der von dem ersten Fuß beabstandet ist, und einen Brückenabschnitt, der sich zwischen dem ersten Fuß (74) und dem zweiten Fuß (78) erstreckt, definiert ist, wobei der erste Fuß (74), der zweite Fuß (78) und der Brückenabschnitt zusammen einen Eingang des Kanals (90) definieren.

3. Leckrückhaltesystem (50) nach Anspruch 2, wobei sich die Platte (72) vom Brückenabschnitt der ersten Schiene (68) weg zur zweiten Schiene (70) erstreckt.

4. Leckrückhaltesystem (50) nach Anspruch 2, wobei eine Verriegelungsvertiefung (122) innerhalb einer Oberseite der vorderen Umfangswand (100) ausgebildet ist und wobei sich mindestens ein Abschnitt des Verriegelungsmechanismus (66) von der Befestigungshalterung (62) durch die Verriegelungsvertiefung (122) und nach außen über die vordere Umfangswand (100) hinaus erstreckt.

5. Leckrückhaltesystem (50) nach Anspruch 4, wobei der Verriegelungsmechanismus (66) einen Riegel (108) einschließt, der drehbar mit der Befestigungshalterung (62) gekoppelt ist, wobei der Riegel (108) konfiguriert ist, um selektiv die Bewegung der Ablage (64) relativ zu der Befestigungshalterung (62) zu blockieren.

6. Leckrückhaltesystem (50) nach Anspruch 5, wobei der Riegel (108) in eine Verriegelungsposition vorgespannt ist, wobei sich der Riegel (108) in der Verriegelungsposition von der Befestigungshalterung (62) über die Verriegelungsvertiefung (122) hinaus nach unten erstreckt, um mindestens einen Abschnitt der vorderen Umfangswand (100) der Ablage (64) zu überlappen, sodass die Bewegung der Ablage (64) zwischen dem Riegel (108) und der Befestigungshalterung (62) eingeschränkt ist.

7. Leckrückhaltesystem (50) nach Anspruch 6, wobei der Riegel (108) durch Schwerkraft in die Verriegelungsposition vorgespannt wird.

8. Leckrückhaltesystem (50) nach Anspruch 6, wobei der Riegel (108) unter Verwendung eines Lagers (110) drehbar mit der Befestigungshalterung (62) verbunden ist, wobei der Riegel (108) und das Lager (110) an dem Brückenabschnitt der ersten Schiene (68) befestigt sind.

9. Leckrückhaltesystem (50) nach Anspruch 6, wobei der Riegel (108) durch Drehen des Riegels (108) relativ zur Befestigungshalterung (62) um etwa 180 Grad aus der Verriegelungsstellung in eine Entriegelungsstellung bewegbar ist.

10. Leckrückhaltesystem (50) nach Anspruch 1, wobei die Befestigungshalterung (62) durch Biegen einer einzelnen Metallplatte in mindestens drei senkrechte Abschnitte geformt wird.

11. Leckrückhaltesystem (50) nach Anspruch 1, wobei ein absorbierendes Pad (106) in dem Fluidbehälter (102) der Ablage (64) empfangen wird.

12. Leckrückhaltesystem (50) nach Anspruch 11, wobei das absorbierende Pad (106) aus einem wiederverwendbaren hydrophoben Material geformt ist.

13. Leckrückhaltesystem (50) nach Anspruch 1, wobei die Platte (72) eine schräge Neigung einschließt.

14. Leckrückhaltesystem (50) nach Anspruch 1, wobei sich die Ablage (64) nach außen über die Platte (72) hinaus erstreckt.

15. Leckrückhaltesystem (50) nach Anspruch 1, wobei die erste Schiene (68), die zweite Schiene (70) und die Platte (72) ein Gestell bilden.

## Revendications

1. Système de confinement des fuites (50) pour un ascenseur (30), comprenant :
un support de montage (62) comportant un premier rail (68), un second rail (70) et un panneau (72) s'étendant entre le premier rail (68) et le second rail (70), dans lequel le panneau (72) est décalé verticalement par rapport aux pieds (74,76) formés sur le premier rail (68), et dans lequel un canal (90) est défini par au moins le premier rail (68) et une face inférieure du panneau (72) ;
le système de confinement des fuites est **caractérisé en ce qu'**il comprend en outre un plateau (64) reçu de manière amovible dans le canal (90) formé dans le support de montage (62), le plateau (64) comprenant une surface inférieure (92) entourée par une pluralité de parois périmétriques (94, 96, 98, 100) qui définissent ensemble un contenant de fluide (102), dans lequel la pluralité de parois périphériques (94, 96, 98, 100) comprend une paroi périphérique avant (100) s'étendant vers le haut au-dessus des autres parois (94, 96, 98) dans la pluralité de parois périphériques (94, 96, 98, 100) ; et
un mécanisme de verrouillage (66) couplé au support de montage (62) et configuré pour s'engager sélectivement dans la paroi périphérique avant (100) du plateau (64) afin de limiter le mouvement du plateau (64) vers l'extérieur du canal (90).

2. Système de confinement des fuites (50) de la revendication 1, dans lequel le premier rail (68) est défini par un premier pied (74), un second pied (78) espacé du premier pied, et une section de pont s'étendant entre le premier pied (74) et le second pied (78), dans lequel le premier pied (74), le second pied (78), et la section de pont définissent ensemble une entrée du canal (90).

3. Système de confinement des fuites (50) de la revendication 2, dans lequel le panneau (72) s'étend de la section de pont du premier rail (68) vers le second rail (70).

4. Système de confinement des fuites (50) de la revendication 2, dans lequel un renfoncement de verrouillage (122) est formé à l'intérieur d'un sommet de la paroi périmétrique avant (100), et dans lequel au moins une partie du mécanisme de verrouillage (66) s'étend depuis le support de montage (62), à travers le renfoncement de verrouillage (122), et vers l'extérieur au-delà de la paroi périmétrique avant (100).

5. Système de confinement des fuites (50) de la revendication 4, dans lequel le mécanisme de verrouillage (66) comprend un loquet (108) qui est couplé de manière rotative au support de montage (62), dans lequel le loquet (108) est configuré pour bloquer sélectivement le mouvement du plateau (64) par rapport au support de montage (62).

6. Système de confinement des fuites (50) de la revendication 5, dans lequel le loquet (108) est incliné dans une position de verrouillage, dans laquelle, en position de verrouillage, le loquet (108) s'étend vers le bas à partir du support de montage (62), au-delà du renfoncement de verrouillage (122), pour chevaucher au moins une partie de la paroi périmétrique avant (100) du plateau (64) de sorte que le mouvement du plateau (64) entre le loquet (108) et le support de montage (62) est restreint.

7. Système de confinement des fuites (50) de la revendication 6, dans lequel le loquet (108) est poussé en position de verrouillage par la gravité.

8. Système de confinement des fuites (50) de la revendication 6, dans lequel le loquet (108) est couplé de manière rotative au support de montage (62) à l'aide d'un palier (110), dans lequel le loquet (108) et le palier (110) sont fixés à la section de pont du premier rail (68).

9. Système de confinement des fuites (50) de la revendication 6, dans lequel le loquet (108) peut passer de la position de verrouillage à la position de déverrouillage en faisant pivoter le loquet (108) d'environ 180 degrés par rapport au support de montage (62).

10. Système de confinement des fuites (50) de la revendication 1, dans lequel le support de montage (62) est formé par le pliage d'un panneau métallique singulier en au moins trois sections perpendiculaires.

11. Système de confinement des fuites (50) de la revendication 1, dans lequel un tampon absorbant (106) est reçu à l'intérieur du contenant de fluide (102) du plateau (64).

12. Système de confinement des fuites (50) de la revendication 11, dans lequel le tampon absorbant (106) est formé d'un matériau hydrophobe réutilisable.

13. Système de confinement des fuites (50) de la revendication 1, dans lequel le panneau (72) comprend une pente angulaire.

14. Système de confinement des fuites (50) de la revendication 1, dans lequel le plateau (64) s'étend vers l'extérieur au-delà du panneau (72).

15. Système de confinement des fuites (50) de la revendication 1, dans lequel un berceau est défini par le premier rail (68), le second rail (70) et le panneau (72) .
